(19) 

**Europäisches Patentamt**
**European Patent Office**
**Office européen des brevets**

(11) **EP 4 611 285 A1**

(12) **EUROPEAN PATENT APPLICATION**
published in accordance with Art. 153(4) EPC

(43) Date of publication:
**03.09.2025 Bulletin 2025/36**

(21) Application number: **22963012.4**

(22) Date of filing: **25.10.2022**

(51) International Patent Classification (IPC):
***H04L 1/00*** *(2006.01)*

(52) Cooperative Patent Classification (CPC):
**H04L 1/00**

(86) International application number:
**PCT/CN2022/127431**

(87) International publication number:
**WO 2024/087025 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **QIAO, Xuemei
Beijing 100085 (CN)**
• **MU, Qin
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **RESOURCE CONFIGURATION METHOD AND APPARATUS, AND STORAGE MEDIUM**

(57)     The present disclosure relates to a resource configuration method and apparatus, and a storage medium. The method comprises: determining, on the basis of information predefined by a protocol and configuration information sent by a network device, a time-frequency resource matching a communication bandwidth, wherein the communication bandwidth is less than or equal to a bandwidth threshold. The present disclosure achieves time-frequency resource configuration for dedicated spectrum.

S11

determine time-frequency resources that match a communication bandwidth based on protocol-predefined information and configuration information sent by a network device

FIG. 2

EP 4 611 285 A1

**Description**

<u>**TECHNICAL FIELD**</u>

The disclosure relates to the field of wireless communication technology, in particular to a resource configuration method, a resource configuration apparatus and a storage medium.

<u>**BACKGROUND**</u>

Currently, New Radio (NR) technology is applied to certain spectrums (e.g., n8, n26, n28 and n100) of Long Term Evolution (LTE)/Global System for Mobile Communications-Railway (GSM-R). These spectrums mainly provide communication services for spectrums dedicated to power system, railway system, public protection and disaster relief in some countries and regions.

In the related art, communication bandwidths of the dedicated spectrums are usually 3MHz or 5MHz, while communication bandwidths supported by NR by default include 5MHz and 10MHz. Therefore, the NR technology is currently unable to support communication in dedicated spectrums with a communication bandwidth of 3MHz.

<u>**SUMMARY**</u>

To overcome problems in related art, the disclosure provides a resource configuration method, a resource configuration apparatus and a storage medium.

According to a first aspect of embodiments of the disclosure, a resource configuration method is provided. The method includes:

determining time-frequency resources that match a communication bandwidth based on protocol-predefined information and configuration information sent by a network device, in which the communication bandwidth is less than or equal to a bandwidth threshold.

According to a second aspect of embodiments of the disclosure, another resource configuration method is provided. The method includes:

sending configuration information to a terminal, so that the terminal can determine time-frequency resources that match a communication bandwidth based on protocol-predefined information and configuration information, in which the communication bandwidth is less than or equal to a bandwidth threshold.

According to a third aspect of embodiments of the disclosure, a resource configuration apparatus is provided. The apparatus includes:

a processing module, configured to determine time-frequency resources that match a communication bandwidth based on protocol-predefined information and configuration information sent by a network device, in which the communication bandwidth is less than or equal to a bandwidth threshold.

According to a fourth aspect of embodiments of the disclosure, another resource configuration apparatus is provided. The apparatus includes:

a sending module, configured to send configuration information to a terminal, so that the terminal can determine time-frequency resources that match a communication bandwidth based on protocol-predefined information and configuration information, in which the communication bandwidth is less than or equal to a bandwidth threshold.

According to a fifth aspect of embodiments of the disclosure, a communication system is provided. The communication system includes: a terminal and a network device.

The terminal is configured to perform the method described in the first aspect.

The network device is configured to perform the method described in the second aspect.

According to a sixth aspect of embodiments of the disclosure, a resource configuration device is provided. The device includes:

a processor; and
a memory for storing instructions executable by the processor;
in which the processor is configured to perform the method described in the first aspect.

According to a seventh aspect of embodiments of the disclosure, a resource configuration device is provided. The device includes:

a processor; and
a memory for storing instructions executable by the processor;
in which the processor is configured to perform the method described in the second aspect.

According to an eighth aspect of embodiments of the disclosure, a storage medium is provided. The storage medium stores instructions, and when the instructions stored in the storage medium are executed by a processor, the processor is caused to perform the method described in the first aspect.

According to a ninth aspect of embodiments of the disclosure, a storage medium is provided. The storage medium stores instructions, and when the instructions stored in the storage medium are executed by a processor, the processor is caused to perform the method described in the second aspect.

The technical schemes provided by the embodiments of the disclosure include the following beneficial effects. The terminal determines the time-frequency resources matching the communication bandwidth through the protocol-predefined information and the configuration information sent by the network device. Since the matching communication bandwidth of the terminal is less than or equal to the bandwidth threshold, the network device and the terminal can communicate through communication bandwidths supported by dedicated spectrums.

It is understood that both the foregoing general description and the following detailed description are exemplary and explanatory only and do not limit the disclosure.

## BRIEF DESCRIPTION OF THE DRAWINGS

The accompanying drawings, which are incorporated in and constitute a part of this specification, illustrate embodiments consistent with the disclosure and together with the description serve to explain the principles of the disclosure.

FIG. 1 is a schematic diagram of a wireless communication system according to an exemplary embodiment.
FIG. 2 is a flowchart of a resource configuration method according to an exemplary embodiment.
FIG. 3 is a flowchart of another resource configuration method according to an exemplary embodiment.
FIG. 4 is a flowchart of yet another resource configuration method according to an exemplary embodiment.
FIG. 5 is a block diagram of a resource configuration apparatus according to an exemplary embodiment.
FIG. 6 is a block diagram of another resource configuration apparatus according to an exemplary embodiment.
FIG. 7 is a block diagram of a resource configuration device according to an exemplary embodiment.
FIG. 8 is a block diagram of another resource configuration device according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure.

A resource configuration method provided by an embodiment of the disclosure is applied to a scenario where a network device configures time-frequency resources for a terminal.

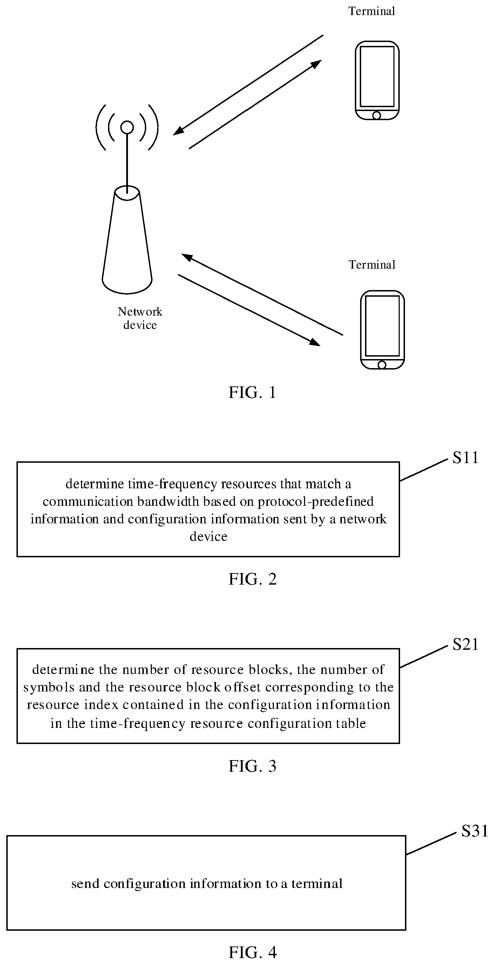

It is understood that a wireless communication system shown in FIG. 1 is only a schematic illustration, and the wireless communication system may also include other network devices, such as core network devices, wireless relay devices and wireless backhaul devices, which are not shown in FIG. 1. The number of network devices and the number of terminals included in the wireless communication system are not limited in the embodiments of the disclosure.

It is further understood that the wireless communication system of the embodiments of the disclosure is a network that provides wireless communication functions. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. Depending on different factors of networks, such as capacity, rate and latency, the networks are classified into second Generation (2G) networks, 3G networks, 4G networks or future evolved networks, such as 5G networks (which are also called NR networks). For easy of description, in the disclosure, the wireless communication network is sometimes simply referred to as a network.

The network device involved in the disclosure may also be referred to as a radio access network device. The radio access network device may be: a base station, an evolved node B, a home base station, an access point (AP) in a wireless fidelity (WI-FI) system, a wireless relay node, a wireless backhaul node, a transmission point (TP) or a transmission and reception point (TRP), a gNB in a NR system, or a component or a part of the devices that constitute the base station. It should be understood that the specific technology and specific device form adopted by the network device are not limited in the embodiments of the disclosure. In the disclosure, the network device can provide a communication coverage for a specific geographical area, and can communicate with terminals located in the coverage (cell). The network device may also be a vehicle-mounted device in a vehicle to everything (V2X) communication system.

The terminal involved in the disclosure may also be referred to as a terminal device, a user equipment (UE), a mobile station (MS), or a mobile terminal (MT), which is a device that provides voice and/or data connectivity to a user. For example, the terminal may be a handheld device or a vehicle-mounted device with a wireless connectivity function. For example, the existing terminals include a mobile phone, a customer premise equipment (CPE), a pocket personal computer (PPC), a handheld computer, a personal digital assistant (PDA), a laptop, a tablet computer, a wearable device, or a vehicle-mounted device, etc. In addition, the terminal may also be a vehicle-mounted device in the V2X communication system. It should be understood that the specific technology and specific device form adopted by the terminal are not limited in the embodiments of the disclosure.

In related art, the communication bandwidths supported by the NR by default include 5MHz and 10MHz. When the terminal interacts with the network device, a video resource configuration for a specified communication bandwidth is realized by means of a time-frequency resource configuration table agreed upon in a protocol. Table 1 below shows the time-frequency resource configuration table agreed upon in the protocol in the related art.

**Table 1**

| Index | SSB and CORESET multiplexing pattern | Number of RBs | Number of symbols | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | reserved | | | |

As illustrated in Table 1 above, the time-frequency resource configuration table defines how the time-frequency resource are configured for a minimum channel bandwidth of 5MHz or 10MHz when a sub-carrier spacing (SCS) of a physical downlink control channel (PDCCH) and Synchronization and PBCH block is 15kHz. In detail, the time-frequency resource configuration table defines correspondence relationships among resource index (Index), Synchronization Signal (SS) /Physical Broadcast Channel(PBCH) Block (SSB) and Control Resource Set (CORESET) multiplexing (SS/PBCH block and CORESET multiplexing pattern), the number of resource blocks (RBs) in a CORESET ( $\text{Number of RBs } N_{RB}^{CORESET}$ ),    the    number    of    symbols    occupied    by    a    CORESET    ( $\text{Number of Symbols } N_{symb}^{CORESET}$ ) and RB Offset (Offset (RBs) ). In a communication scenario, the network device and the terminal are configured with the same time-frequency resource configuration table. The network device configures configuration information containing the corresponding index based on the required communication bandwidth (5MHz or 10MHz) or a larger bandwidth, and sends the configuration information to the terminal, so that the terminal can determine time-frequency resources based on the above Table 1.

Currently, related art supports application of NR technology to certain spectrums (e.g., n8, n26, n28 and n100) of LTE/GSM-R. These spectrums mainly provide communication services for spectrums dedicated to power system, railway system, public protection and disaster relief in some countries and regions.

However, since NR technologies and LTE define the number of available RBs corresponding to a communication bandwidth 5MHz as 25, and the LTE stipulates defines the number of available RBs corresponding to a communication bandwidth 3MHz as 15, the minimum number of available RBs of the current CORESET is 24 (which is greater than that corresponding to the communication bandwidth 3MHz). Therefore, the time-frequency resource configuration table defined in the related art cannot adapt to communications with communication bandwidth 3MHz, so it cannot meet communication requirements of the aforementioned dedicated spectrums.

In view of the above, the disclosure provides a resource configuration method. The method adopts the configuration of the original protocol with respect to the communication bandwidth. On the basis, the terminal may determine the time-frequency resources matched to the communication bandwidth by means of the predefined information of the protocol and the configuration information sent by the network device, and it is ensured that the matched communication bandwidth is less than or equal to a bandwidth threshold. Based on this, communication between the network device and the terminal may be carried out through the communication bandwidths supported by the dedicated spectrums.

FIG. 2 is a flowchart of a resource configuration method according to an exemplary embodiment. As illustrated in FIG. 2, the resource configuration method is applied to a terminal and includes the following steps.

At step S11, time-frequency resources that match a communication bandwidth are determined based on protocol-predefined information and configuration information sent by a network device.

In this embodiment of the disclosure, the configuration information is sent by the network device to indicate time-frequency domain resources that match the communication bandwidth. After receiving the configuration information, the terminal may parse the configuration information according to the protocol predefined information to determine the time-frequency resources that match the communication bandwidth.

In the method provided by this embodiment of the disclosure, in order to enable the time-frequency resources acquired by the terminal to be applied to the communication bandwidths supported by the dedicated spectrums, the network device may instruct the terminal to use the time-frequency resources adapted to specific communication bandwidths of the dedicated spectrums through the configuration information. The specific bandwidths may be, for example, communication bandwidths less than or equal to a bandwidth threshold, and the bandwidth threshold is used to adapt communication bandwidths used for communications to the aforementioned dedicated spectrums.

In the embodiments of the disclosure, there may be a plurality of communication bandwidths adapted to the terminal that are less than or equal to the bandwidth threshold. As a possible implementation, the terminal may be adapted with two different communication bandwidths, and hereinafter, for convenience of description, the two different communication bandwidths adapted by the terminal are referred to as a first communication bandwidth and a second communication bandwidth, respectively. For example, for a communication scenario applied to the aforementioned dedicated spectrums, the communication bandwidths to which the terminal is adapted may include, for example, a first communication bandwidth and a second communication bandwidth. The first communication bandwidth is small than the second communication bandwidth. For example, taking the dedicated spectrums as examples, the first communication bandwidth may be, for example, 3MHz, and the second communication bandwidth may be, for example, 5MHz.

In the embodiments of the disclosure, the time-frequency resource may include the number of RBs in a CORESET ( $Number\ of\ RBs\ N_{RB}^{CORESET}$ ), the number of symbols occupied by a CORESET ( $Number\ of\ Symbols\ N_{symb}^{CORESET}$ ) and RB offset (Offset (RBs)). Correspondingly, as a possible implementation, the protocol-predefined information includes, for example, the time-frequency resource configuration table of a CORESET#0. The time-frequency resource configuration table includes correspondence relationships among index, number of RBs, number of symbols and RB offset. Correspondingly, the configuration information may include an resource index, so that the terminal can determine time-frequency resources used for communication according to the resource index contained in the configuration information.

FIG. 3 is a flowchart of another resource configuration method according to an exemplary embodiment. As illustrated in FIG. 3, the resource configuration method includes the following steps.

At step S21, a number of RBs in the CORESET, a number of symbols occupied by the CORESET and an RB offset corresponding to the resource index contained in the configuration information are determined in the time-frequency resource configuration table.

In this embodiment of the disclosure, one or more time-frequency resource configuration tables can be configured in the protocol-predefined information according to a plurality of communication bandwidths supported between the terminal and the network device.

In an implementation, a single time-frequency resource configuration table of the CORESET#0 can be configured for the terminal. It is understood that the time-frequency resource configuration table is shared by a plurality of communication bandwidths adapted by the terminal. The terminal may determine the time-frequency resources matched to different communication bandwidths in the time-frequency resource configuration table based on the resource index. For example, taking communications between the terminal and the network device through the first communication bandwidth and the second communication bandwidth as examples, the first communication bandwidth and the second communication bandwidth correspond to the same time-frequency resource configuration table of the CORESET#0. That is, the configured time-frequency resource configuration table shared by the first communication bandwidth and the second communication bandwidth includes an index corresponding to the first communication bandwidth and an index corresponding to the second communication bandwidth. For convenience of description, the present disclosure hereinafter refers to the resource index corresponding to the first communication bandwidth as the first resource index and the resource index corresponding to the second communication bandwidth as the second resource index.

Generally, the RB offset is used to compensate a spectrum offset between SSB and CORESET#0. In detail, the terminal may determine the lowest spectrum position of CORESET#0 according to the lowest spectrum position of the SSB and the RB offset, and then determine the frequency domain position occupied by the CORESET#0 according to the lowest spectrum position of the CORESET # 0 and the number of RBs in the CORESET.

In the method provided by this embodiment of the disclosure, in order to make the CORESET#0 fall within the bandwidth range corresponding to the SSB, the corresponding RB offset in the CORESET#0 is also adjusted accordingly. For example, the disclosure sets the RB offset corresponding to the first resource index to a negative value or 0. For example, the first communication bandwidth is 3MHz, since the number of RBs in the CORESET configured for the SSB is 20, and the number of RBs in the CORESET corresponding to 3MHz is 15, setting the RB offset corresponding to the first resource index to a negative value or 0 ensures that the CORESET#0 can fall into the bandwidth range corresponding to the SSB.

Three possible ways to determine the lowest spectrum position of the CORESET#0 are provided below.

Way 1: the lowest spectrum position of the CORESET#0 is determined based on the lowest spectrum position of the SSB and the RB offset.

Way 2: the lowest spectrum position of the CORESET#0 is determined based on the lowest spectrum position at which the SSB is actually transmitted and the RB offset.

Way 3: the lowest spectrum position of the CORESET#0 is determined based on the lowest spectrum position at which the SSB is actually received and the RB offset.

Generally, due to communication constraints between the terminal and the network device, the lowest spectrum position configured for the SSB is different from the lowest spectrum position at which the SSB is actually transmitted (or received). Therefore, compared to the first way, the second way and the third way have better accuracy.

For the convenience of understanding, Table 2 shows a feasible configuration way that allows the first communication bandwidth and the second communication bandwidth to share the same time-frequency resource configuration table. The first communication bandwidth is 3MHz, and the second communication bandwidth is 5MHz.

**Table 2**

| Index | SSB and CORESET multiplexing pattern | Number of RBs | Number of symbols | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 6 | 1 | -3 |
| 7 | 1 | 6 | 1 | -7 |
| 8 | 1 | 6 | 2 | -3 |
| 9 | 1 | 6 | 2 | -7 |
| 10 | 1 | 8 | 3 | -3 |
| 11 | 1 | 8 | 3 | -6 |
| 12 | 1 | 12 | 1 | -3 |
| 13 | 1 | 12 | 1 | -4 |
| 14 | 1 | 12 | 2 | -3 |
| 15 | 1 | 12 | 2 | -4 |

In the method provided by this embodiment of the disclosure, the time-frequency resource configuration table includes the first resource index corresponding to the first communication bandwidth and the second resource index corresponding to the second communication bandwidth. The first resource index and the second resource index may be the same or different. For example, a part of indexes in the time-frequency resource configuration table are configured as indexes dedicated to configuring the first communication bandwidth, and the remaining indexes are configured as indexes dedicated to configuring the second communication bandwidth. For another example, there are common indexes between the first communication bandwidth and the second communication bandwidth.

Taking Table 2 as an example, the numbers of RBs in the CORESET corresponding to the resource indexes 0-15 are within the range of 6-24, and the number of available RBs corresponding to the communication bandwidth 5MHz is 25. Therefore, the resource indexes 0-15 can be applied to a communication system with communication bandwidth 5MHz. If the second communication bandwidth is 5MHz, the resource indexes 0-15 are the second resource indexes. Correspondingly, because the numbers of RBs in the CORESETs corresponding to the resource indexes 6-15 are within the range of 6-12, and the number of available RBs corresponding to the communication bandwidth 3MHz is 15, the resource indexes 6-15 can be applied not only to communication systems with communication bandwidth 5MHz, but also to communication systems with communication bandwidth 3MHz. If the second communication bandwidth is 3MHz, the resource indexes 6-15 are the first resource indexes. On the basis, the resource indexes 6-15 are common indexes between the first communication bandwidth and the second communication bandwidth.

In addition, corresponding to the above embodiments, the disclosure also defines time-frequency resource configuration tables for different communication bandwidths. The time-frequency resource configuration tables are used to provide the terminal with time-frequency resources that match different communication bandwidths, and each time-frequency resource configuration table is only suitable for one communication bandwidth. For example, taking the first communication bandwidth and the second communication bandwidth as examples, the time-frequency resource configuration tables configured by the terminal include a time-frequency resource configuration table of the CORESET#0 corresponding to the first communication bandwidth and a time-frequency resource configuration table of the CORESET#0 corresponding to the second communication bandwidth. For convenience of description, the time-frequency resource configuration table of the CORESET#0 corresponding to the first communication bandwidth is called the first time-frequency resource configuration table, and the time-frequency resource configuration table of the CORESET#0 corresponding to the second communication bandwidth is called the second time-frequency resource configuration table. It is understood that the first time-frequency resource configuration table is different from the second time-frequency resource configuration table.

For example, the first communication bandwidth is 3MHz and the second communication bandwidth is 5MHz, partial resource indexes in the time-frequency resource configuration table inherent in the traditional protocol are used to configure the terminal to communicate with communication bandwidth 5MHz, and these indexes can be directly used for the time-frequency resource configuration of 5MHz in the embodiments of the disclosure. Therefore, as a feasible implementation, partial resource indexes in the second time-frequency resource configuration table correspond to the second communication bandwidth.

For the convenience of understanding, Table 3 shows a feasible configuration mode of the first time-frequency resource configuration table, and Table 4 shows a feasible configuration mode of the second time-frequency resource configuration table.

**Table 3**

| Index | SS and CORESET multiplexing pattern | Number of RBs | Number of symbols | Offset (RBs) |
|---|---|---|---|---|
| 0 | 1 | 6 | 1 | -7 |
| 1 | 1 | 6 | 2 | -7 |
| 2 | 1 | 8 | 3 | -3 |
| 3 | 1 | 8 | 3 | -6 |
| 4 | 1 | 12 | 1 | -3 |
| 5 | 1 | 12 | 1 | -4 |

**Table 4**

| Index | SS and CORESET multiplexing pattern | Number of RBs | Number of symbols | Offset (RBs) |
|---|---|---|---|---|
| 0 | 1 | 24 | 2 | 0 |
| 1 | 1 | 24 | 2 | 2 |

(continued)

| Index | SS and CORESET multiplexing pattern | Number of RBs | Number of symbols | Offset (RBs) |
|-------|-------------------------------------|---------------|-------------------|--------------|
| 2 | 1 | 24 | 2 | 4 |
| 3 | 1 | 24 | 3 | 0 |
| 4 | 1 | 24 | 3 | 2 |
| 5 | 1 | 24 | 3 | 4 |

According to Table 4 above, the second time-frequency resource configuration table adopts a consistent configuration for the resource indexes 0-5 compared with the time-frequency resource configuration table involved in Table 1. The method uses partial resource indexes defined in the inherent protocol, which can reduce development costs. In addition, as shown in Table 4, if the resource index is configured with 3 bits, the second time-frequency resource configuration table still saves three reserved bits of the resource indexes 6-8.

In view of this, a bit overhead can be reduced form the original bit overhead (as shown in Table 1, the resource index is configured with 4 bits, that is, the bit overhead of the resource index is 4 bits), so that the second time-frequency resource configuration table may have a smaller bit overhead while meeting normal configuration requirements. For example, the bit overhead for indicating the configuration information may be configured to be less than or equal to a bit number threshold. In view of the fact that the original bit overhead mentioned above is 4 bits, the disclosure may indicate that the bit overhead of the resource index is reduced to 3. Correspondingly, the bit overhead for indicating the configuration information is 3 bits.

In addition, in this embodiment of the disclosure, the number of symbols occupied by the time-frequency resource configuration table of the CORESET#0 can also be adjusted. In a feasible implementation, the numbers of symbols occupied by the time-frequency resource configuration tables of the CORESET#0 corresponding to each of the first communication bandwidth and the second communication bandwidth are configured to be less than or equal to a target symbol number threshold.

The target symbol number threshold is obtained by expanding the number of symbols corresponding to a reference symbol number threshold, and the value is greater than 3. The reference symbol number threshold is understood as a symbol number threshold set for the number of symbols occupied by the time-frequency resource configuration table of the CORESET#0 when configuring the time-frequency resource configuration table in the traditional way. For example, taking Table 1 as an example, the maximum number of symbols occupied by each time-frequency resource configuration table configured in the time-frequency resource configuration table is 3, that is, the reference symbol number threshold is configured to be 3. On the basis, by expanding the number of symbols occupied by each time-frequency resource configuration table configured in the time-frequency resource configuration table, the number of symbols occupied by the time-frequency resource configuration table can be greater than the original defined reference symbol number threshold, for example, greater than 3. Taking 3MHz as an example, since the number of RBs in the CORESET configured for 3MHz is small (for example, 15), the frequency domain range supported by the terminal for communications with communication bandwidth 3MHz is limited. In view of this, by expanding the number of symbols occupied by the time-frequency resource configuration table, the time-domain range supported by the terminal for communications is expanded, which indirectly alleviates limitations on the frequency-domain range of the terminal for communications with communication bandwidth 3MHz, thereby ensuring the communication capability of the terminal.

In an implementation, the number of symbols occupied by the CORESET#0 is determined based on the number of symbols occupied by the CORESET corresponding to the resource index in the time-frequency resource configuration table. The number of symbols occupied by the CORESET corresponding to the resource index in the time-frequency resource configuration table is less than or equal to the target symbol number threshold. It can be seen that the method is equivalent to directly setting the number of symbols to be less than or equal to the target threshold for the number of symbols in the time-frequency resource configuration table on the basis of the target symbol number threshold. In another implementation, the number of symbols occupied by the CORESET#0 is determined based on an expansion factor and the number of symbols occupied by the CORESET corresponding to the resource index in the time-frequency resource configuration table. It can be seen that the method is equivalent to keeping the numbers of symbols occupied by CORESETs previously configured in the time-frequency resource configuration table. The method of indexing the number of symbols occupied by the CORESET is changed from indexing directly through the time-frequency resource configuration table to determining the number of symbols occupied by the CORESET in the time-frequency resource configuration table, so as to enable the terminal to determine the number of symbols actually used by means of the expansion factor. The above methods are used selectively, or in combination for different indexes in the same time-frequency resource configuration table.

For example, with respect to the above approach of determining the number of symbols actually used by means of the expansion factor, the following two feasible implementation schemes are provided.

In an example, a product of the expansion factor and the number of symbols occupied by the CORESET corresponding to the resource index in the time-frequency resource configuration table can be configured to be less than or equal to the target threshold for the number of symbols. On the basis, the number of symbols occupied by the CORESET#0 can be determined based on the product of the expansion factor and the number of symbols occupied by the CORESET corresponding to the resource index in the time-frequency resource configuration table. For example, if the expansion factor is 4/3 and the number of symbols occupied by the CORESET corresponding to the resource index in the time-frequency resource configuration table is 3, the number of symbols occupied by the CORESET actually used by the terminal is 4.

In another example, a sum of the expansion factor and the number of symbols occupied by the CORESET corresponding to the resource index in the time-frequency resource configuration table is configured to be less than or equal to the target symbol number threshold. On the basis, the number of symbols occupied by the CORESET#0 can be determined based on the sum of the expansion factor and the number of symbols occupied by the CORESET corresponding to the resource index in the time-frequency resource configuration table. For example, if the expansion factor is 1 and the number of symbols occupied by the CORESET corresponding to the resource index in the time-frequency resource configuration table is 3, the number of symbols occupied by the CORESET actually used by the terminal is 4.

In the above embodiments, the expansion factor may be determined based on the protocol-predefined information or configure based on the network device. Determining the expansion factor based on the protocol-predefined information means that the expansion factor is predefined when configuring the protocol between the terminal and the network device. On the basis, for actual communication scenarios, the terminal can hop to the protocol-predefined information and determine the expansion factor to be used. Correspondingly, different from the way of determining the expansion factor based on the protocol-predefined information, the terminal can configure the expansion factor based on the network device. It is understood that in actual communication scenarios, the network device configures the expansion factor in real time based on demand. The method has better flexibility than the above-mentioned method of determining the expansion factor based on the protocol-predefined information.

Based on the same concept, an embodiment of the disclosure also provide a resource configuration method, which is applied to a network device.

The network device involved in this embodiment is used to interact with the terminal involved in any of the above embodiments to complete the configuration of time-frequency resources actually used by the terminal. If there is any ambiguity in the following embodiments, reference may be made to any of the above embodiments. Similarly, if there is any ambiguity in the above-mentioned embodiments, reference may also be made to any of the embodiments below.

FIG. 4 is a flowchart of a resource configuration method according to an exemplary embodiment. As illustrated in FIG. 4, the resource configuration method is applied to a network device and includes the following step.

At step S31, configuration information is sent to a terminal.

In this embodiment of the disclosure, the network device sends the configuration information to the terminal, so that the terminal can determine time-frequency resources that match a communication bandwidth based on protocol-predefined information and the configuration information.

In the method provided by this embodiment of the disclosure, in order to enable the time-frequency resources acquired by the terminal to be applied to the communication bandwidth supported by the dedicated spectrum, the network device may instruct the terminal to use the time-frequency resources adapted to the specific communication bandwidth of the dedicated spectrum through the configuration information. The specific bandwidth may be, for example, a communication bandwidth less than or equal to a bandwidth threshold.

The communication bandwidth includes a first communication bandwidth and a second communication bandwidth, and the first communication bandwidth is less than the second communication bandwidth. For example, taking the dedicated spectrum as an example, the first communication bandwidth may be, for example, 3MHz, and the second communication bandwidth may be, for example, 5MHz.

In the resource configuration method provided by this embodiment of the disclosure, the protocol-predefined information includes a time-frequency resource configuration table of a CORESET#0. The time-frequency resource configuration table includes correspondence relationships among indexes, numbers of RBs, numbers of symbols and RB offsets. The configuration information includes an index. Through the configuration information, the terminal can determine, in the time-frequency resource configuration table, a number of RBs in the CORESET, a number of symbols occupied by the CORESET and an RB offset corresponding to an index contained in the configuration information.

In the embodiments of the disclosure, for a plurality of communication bandwidths supported between the terminal and the network device, one or more time-frequency resource configuration tables may be configured in the protocol-predefined information accordingly.

In an implementation, a single time-frequency resource configuration table for CORESET#0 can be configured for the terminal. It is understood that the single time-frequency resource configuration table is shared by the plurality of communication bandwidths adapted by the terminal. That is, the first communication bandwidth and the second communication bandwidth correspond to the same time-frequency resource configuration table of the CORESET#0.

In the resource configuration method provided by embodiments of the disclosure, the resource index includes a first resource index and a second resource index. The first resource index is understood as an index corresponding to the first communication bandwidth, and the second resource index is understood as an index corresponding to the second communication bandwidth.

In addition, the RB offset is used to compensate spectrum difference between the SSB and the CORESET#0. In the method provided by this embodiment of the disclosure, in order to make the CORESET#0 fall within the bandwidth range corresponding to the SSB, the corresponding RB offset in the CORESET#0 is also adjusted accordingly. In the resource configuration method provided by embodiments of the disclosure, the RB offset corresponding to the first resource index is a negative value.

In the resource configuration method provided by embodiments of the disclosure, the first communication bandwidth corresponds to the first time-frequency resource configuration table of the CORESET#0, and the second communication bandwidth corresponds to the second time-frequency resource configuration table of the CORESET#0. The first time-frequency resource configuration table is different from the second time-frequency resource configuration table.

For example, the first communication bandwidth is 3MHz and the second communication bandwidth is 5MHz, part of the resource indexes in the time-frequency resource configuration table inherent in the traditional protocol are used to configure the terminal to communicate with communication bandwidth 5MHz, and these indexes can be directly used for the time-frequency resource configuration of 5MHz in the embodiments of the disclosure. Therefore, as a feasible implementation, part of the resource indexes in the second time-frequency resource configuration table correspond to the second communication bandwidth.

In addition, as shown in Table 4 related to the above embodiment, if the resource index is configured with 3 bits, the second time-frequency resource configuration table still saves three reserved bits with the resource indexes 6-8. In view of this, the bit overhead can be reduced from the original bit overhead (as shown in Table 1, the resource index is configured with 4 bits, that is, the bit overhead of the resource index is 4 bits), so that the second time-frequency resource configuration table may have a smaller bit overhead while meeting normal configuration requirements. For example, the bit overhead for indicating the configuration information is less than or equal to a bit number threshold.

In view of the above-mentioned situation that the original bit overhead is 4 bits, the disclosure may indicate that the bit overhead of the resource index is reduced to 3. Correspondingly, the bit overhead for indicating the configuration information is 3 bits.

For example, the numbers of symbols occupied by the time-frequency resource configuration tables of the CORESET#0 corresponding to each of the first communication bandwidth and the second communication bandwidth are less than or equal to a target symbol number threshold. The target symbol number threshold is obtained by expanding the number of symbols corresponding to a reference symbol number threshold, and the target symbol number threshold is greater than 3.

In an implementation, the number of symbols occupied by the CORESET#0 is determined based on the number of symbols occupied by the CORESET corresponding to the resource index in the time-frequency resource configuration table. The number of symbols occupied by the CORESET corresponding to the resource index in the time-frequency resource configuration table is less than or equal to the target symbol number threshold. It can be seen that the method is equivalent to directly setting the target symbol number threshold as the reference for configuration, and configuring the number of symbols that is less than or equal to the target symbol number threshold in the time-frequency resource configuration table. In another implementation, the number of symbols occupied by the CORESET#0 is determined based on an expansion factor and the number of symbols occupied by the CORESET corresponding to the resource index in the time-frequency resource configuration table. It can be seen that the method is equivalent to keeping the numbers of symbols occupied by CORESETs previously configured in the time-frequency resource configuration table, The method of indexing the number of symbols occupied by the CORESET is changed from indexing directly through the time-frequency resource configuration table to determining the number of symbols occupied by the CORESET in the time-frequency resource configuration table, so as to enable the terminal to determine the number of symbols actually used by means of the expansion factor. The above method are used selectively, or in combination for different indexes in the same time-frequency resource configuration table.

For example, with respect to the above approach of determining the number of symbols actually used by means of the expansion factor, the following two feasible implementation schemes are provided.

In an example, a product of the expansion factor and the number of symbols occupied by the CORESET corresponding to the resource index in the time-frequency resource configuration table can be configured to be less than or equal to the target symbol number threshold. On the basis, the number of symbols occupied by the CORESET#0 can be determined based on the product of the expansion factor and the number of symbols occupied by the CORESET corresponding to the resource index in the time-frequency resource configuration table. For example, if the expansion factor is 4/3 and the number of symbols occupied by the CORESET corresponding to the resource index in the time-frequency resource configuration table is 3, the number of symbols occupied by the CORESET actually used by the terminal is 4.

In another example, a sum of the expansion factor and the number of symbols occupied by the CORESET corresponding to the resource index in the time-frequency resource configuration table is configured to be less than or equal to the target symbol number threshold. On the basis, the number of symbols occupied by the CORESET#0 can be determined based on the sum of the expansion factor and the number of symbols occupied by the CORESET corresponding to the resource index in the time-frequency resource configuration table. For example, if the expansion factor is 1 and the number of symbols occupied by the CORESET corresponding to the resource index in the time-frequency resource configuration table is 3, the number of symbols occupied by the CORESET actually used by the terminal is 4.

In the above embodiments, the expansion factor may be determined based on the protocol-predefined information or configure based on the network device. Determining the expansion factor based on the protocol-predefined information means that the expansion factor is predefined when configuring the protocol between the terminal and the network device. On the basis, for actual communication scenarios, the terminal can hop to the protocol-predefined information and determine the expansion factor to be used. Correspondingly, different from the way of determining the expansion factor based on the protocol-predefined information, the terminal can configure the expansion factor based on the network device. It is understood that in actual communication scenarios, the network device configures the expansion factor in real time based on demand. The method has better flexibility than the above-mentioned method of determining the expansion factor based on the protocol-predefined information.

In the method provided by embodiments of the disclosure, the network device sends the configuration information to the terminal, so that the terminal can parse the configuration information according to the protocol-predefined information after receiving the configuration information, and determine the time-frequency resources that match the communication bandwidth. Since the terminal and the network device have adjusted the configuration of the original protocol with respect to the communication bandwidth, communications between the terminal and the network device can be carried out with communication bandwidths less than or equal to the bandwidth threshold. As a feasible implementation, the bandwidth threshold can be configured according to the communication bandwidth supported by the dedicated spectrum, so that communications between the terminal and the network device can be carried out with communication bandwidth 3MHz or with communication bandwidth 5MHz. For example, the protocol-predefined information of the terminal includes a time-frequency resource configuration table, through which the terminal can determine the corresponding time-frequency resources. The disclosure also makes corresponding adaptations for indexes corresponding to 3MHz in the time-frequency resource configuration table. In detail, the time-frequency resources include the number of RBs in the CORESET, the number of symbols occupied by the CORESET and the RB offset. In this regard, by configuring the number of RBs in the CORESET supported by 3MHz and expanding the number of symbols occupied by the CORESET correspondingly, the disclosure can ensure the communication effect of communications of the terminal with communication bandwidth 3MHz. In addition, based on the number of RBs in the CORESET corresponding to 3MHz, the disclosure may configure the RB offset to a negative value, so that the CORESET#0 can fall within the bandwidth range corresponding to the SSB, thus ensuring the final communication effect. In conclusion, the disclosure provides a time-frequency resource configuration method applicable to a dedicated spectrum, which can satisfy the time-frequency resource configuration requirements for the dedicated spectrum in a communication scenario.

It should be noted that those skilled in the art understand that the above-mentioned various implementations/embodiments of the embodiments of the disclosure can be used together with the above-mentioned embodiments or used independently. Whether used alone or in combination with the aforementioned embodiments, the implementation principles are similar. In the embodiments of the disclosure, part of the embodiments are described by using implementations that are used together with them. Certainly, those skilled in the art understand that such examples are not limitations of the embodiments of the disclosure.

Based on the same concept, the embodiments of the disclosure also provide a resource configuration apparatus, which is applied to a terminal.

It is understood that, in order to realize the above functions, the resource configuration apparatus provided by the embodiments of the disclosure includes corresponding hardware structures and/or software modules for executing various functions. In combination with the units and algorithm steps of various examples disclosed in the embodiments of the disclosure, the embodiment of the disclosure can be realized in the form of hardware or a combination of hardware and computer software. Whether a function is executed by hardware or by computer software driving the hardware depends on the specific application and design constraints of the technical scheme. Those skilled in the art can use different methods to realize the described functions for each specific application, but such implementations should not be considered as beyond the scope of the technical solutions of the embodiments of the disclosure.

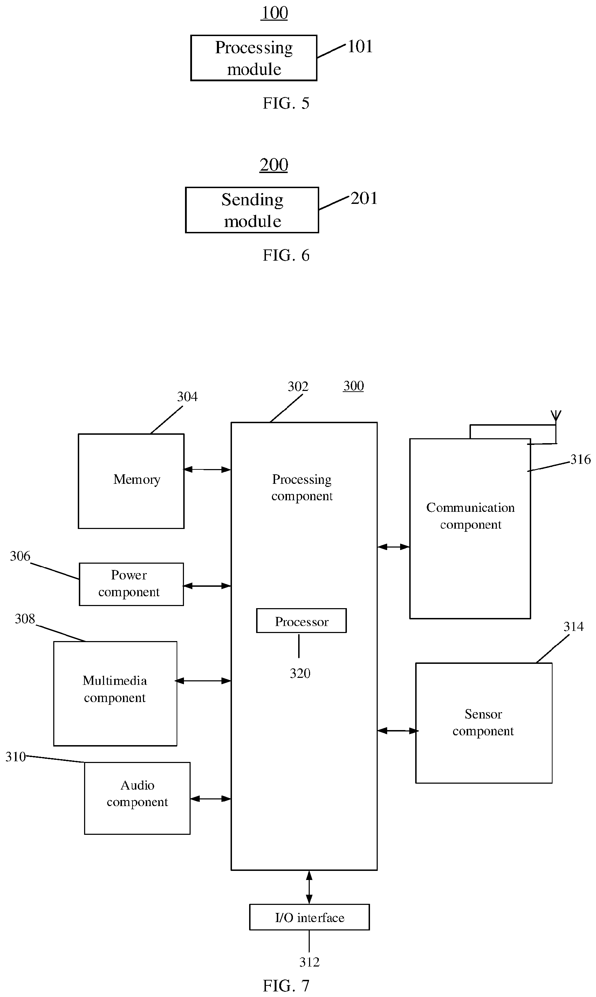

FIG. 5 is a block diagram of a resource configuration apparatus 100 according to an exemplary embodiment. As illustrated in FIG. 5, the apparatus is applied to a terminal, and includes:

a processing module 101, configured to determine time-frequency resources that match a communication bandwidth based on protocol-predefined information and configuration information sent by a network device, in which the communication bandwidth is less than or equal to a bandwidth threshold.

In an implementation, the communication bandwidth includes a first communication bandwidth and a second communication bandwidth, and the first communication bandwidth is less than the second communication bandwidth.

In an implementation, the protocol-predefined information includes a time-frequency resource configuration table of a CORESET#0, the time-frequency resource configuration table includes correspondence relationships among indexes, numbers of RBs in a CORESET, numbers of symbols occupied by the CORESET and RB offsets, and the configuration information includes an index. The processing module 101 determines the time-frequency resources that match the communication bandwidth based on the protocol-predefined information and the configuration information sent by the network device in the following way: determining, in the time-frequency resource configuration table, a number of RBs in the CORESET, a number of symbols occupied by the CORESET and a RB offset corresponding to the resource index contained in the configuration information.

In an implementation, the first communication bandwidth and the second communication bandwidth correspond to the same time-frequency resource configuration table of the CORESET#0.

In an implementation, the resource index includes a first resource index and a second resource index, the first resource index corresponds to the first communication bandwidth, and the second resource index corresponds to the second communication bandwidth.

In an implementation, the RB offset corresponding to the first resource index is a negative value.

In an implementation, the processing module 101 is further configured to: determine the lowest spectrum position of the CORESET#0 based on the lowest spectrum position configured for the SSB and the RB offset; determine the lowest spectrum position of the CORESET#0 based on the lowest spectrum position at which the SSB is actually transmitted and the RB offset; or determine the lowest spectrum position of the CORESET#0 base on the lowest spectrum position at which the SSB is actually received and the RB offset.

In an implementation, the first communication bandwidth corresponds to a first time-frequency resource configuration table of the CORESET#0, and the second communication bandwidth corresponds to a second time-frequency resource configuration table of the CORESET#0. The first time-frequency resource configuration table is different from the second time-frequency resource configuration table.

In an implementation, part of indexes in the second time-frequency resource configuration table correspond to the second communication bandwidth.

In an implementation, a bit overhead for indicating the configuration information is less than or equal to a bit number threshold.

In an implementation, the bit overhead for indicating the configuration information is 3 bits.

In an implementation, the numbers of symbols occupied by the time-frequency resource configuration tables of the CORESET#0 corresponding to each of the first communication bandwidth and the second communication bandwidth are less than or equal to a target symbol number threshold. The target symbol number threshold is obtained by expanding the number of symbols of a reference symbol number threshold, and the target symbol number threshold is greater than 3.

In an implementation, a number of symbols occupied by the CORESET#0 is determined based on a number of symbols occupied by a CORESET corresponding to the resource index in the time-frequency resource configuration table, and the number of symbols occupied by the CORESET corresponding to the resource index in the time-frequency resource configuration table is less than or equal to the target symbol number threshold; and/or the number of symbols occupied by the CORESET#0 is determined based on the number of symbols occupied by the CORESET corresponding to the resource index in the time-frequency resource configuration table and an expansion factor.

In an implementation, determining the number of symbols occupied by the CORESET#0 based on the number of symbols occupied by the CORESET corresponding to the resource index in the time-frequency resource configuration table and the expansion factor, includes: determining the number of symbols occupied by the CORESET#0 based on a product of the expansion factor and the number of symbols occupied by the CORESET corresponding to the resource index in the time-frequency resource configuration table, in which the product is less than or equal to the target symbol number threshold; or determining the number of symbols occupied by the CORESET#0 based on a sum of the expansion factor and the number of symbols occupied by the CORESET corresponding to the resource index in the time-frequency resource configuration table, in which the sum meets the target symbol number threshold.

In an implementation, the expansion factor is determined based on the protocol-predefined information or configure based on the network device.

Based on the same concept, the embodiments of the disclosure also provide a resource configuration apparatus, which is applied to a network device.

FIG. 6 is a block diagram of a resource configuration apparatus 200 according to an exemplary embodiment. As illustrated in FIG. 6, the apparatus is applied to a network device, and includes:
a sending module 201, configured to send configuration information to a terminal, so that the terminal can determine time-frequency resources that match a communication bandwidth based on protocol-predefined information and configuration information, in which the communication bandwidth is less than or equal to a bandwidth threshold.

In an implementation, the communication bandwidth includes a first communication bandwidth and a second communication bandwidth, and the first communication bandwidth is less than the second communication bandwidth.

In an implementation, the protocol-predefined information includes a time-frequency resource configuration table of a CORESET#0, the time-frequency resource configuration table includes correspondence relationships among indexes, numbers of RBs, numbers of symbols and RB offsets, and the configuration information includes an index. The configuration information allows the terminal to determine, in the time-frequency resource configuration table, a number of RBs, a number of symbols and an RB offset corresponding to the resource index contained in the configuration information.

In an implementation, the first communication bandwidth and the second communication bandwidth correspond to the same time-frequency resource configuration table of the CORESET#0.

In an implementation, the resource index includes a first resource index and a second resource index, the first resource index corresponds to the first communication bandwidth, and the second resource index corresponds to the second communication bandwidth.

In an implementation, the RB offset corresponding to the first resource index is a negative value.

In an implementation, the first communication bandwidth corresponds to a first time-frequency resource configuration table of the CORESET#0, and the second communication bandwidth corresponds to a second time-frequency resource configuration table of the CORESET#0. The first time-frequency resource configuration table is different from the second time-frequency resource configuration table.

In an implementation, part of indexes in the second time-frequency resource configuration table correspond to the second communication bandwidth.

In an implementation, a bit overhead for indicating the configuration information is less than or equal to a bit number threshold.

In an implementation, the bit overhead for indicating the configuration information is 3 bits.

In an implementation, the numbers of symbols occupied by the time-frequency resource configuration tables of the CORESET#0 corresponding to each of the first communication bandwidth and the second communication bandwidth are less than or equal to a target symbol number threshold. The target symbol number threshold is obtained by expanding the numbers of symbols corresponding to a reference symbol number threshold, and the target symbol number threshold is greater than 3.

In an implementation, a number of symbols occupied by the CORESET#0 is determined based on a number of symbols occupied by a CORESET corresponding to the resource index in the time-frequency resource configuration table, and the number of symbols occupied by the CORESET corresponding to the resource index in the time-frequency resource configuration table is less than or equal to the target symbol number threshold; and/or the number of symbols occupied by the CORESET#0 is determined based on the number of symbols occupied by the CORESET corresponding to the resource index in the time-frequency resource configuration table and an expansion factor.

In an implementation, determining the number of symbols occupied by the CORESET#0 based on the number of symbols occupied by the CORESET corresponding to the resource index in the time-frequency resource configuration table and the expansion factor includes: determining the number of symbols occupied by the CORESET#0 based on a product of the expansion factor and the number of symbols occupied by the CORESET corresponding to the resource index in the time-frequency resource configuration table, in which the product is less than or equal to the target symbol number threshold; or determining the number of symbols occupied by the CORESET#0 based on a sum of the expansion factor and the number of symbols occupied by the CORESET corresponding to the resource index in the time-frequency resource configuration table, in which the sum meets the target symbol number threshold.

In an implementation, the expansion factor is determined based on the protocol-predefined information or a configuration of the network device.

With regard to the apparatus in the above embodiments, the specific way in which each module performs operations has been described in detail in the method embodiments, and will not be described in detail here.

FIG. 7 is a block diagram illustrating a resource configuration device 300 according to an exemplary embodiment. For example, the device 300 may be a mobile phone, a computer, a digital broadcasting terminal, a message transceiver device, a game console, a tablet device, a medical device, a fitness device and a PDA.

As illustrated in FIG. 7, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as operations associated with display, telephone calls, data communications, camera operations, and recording operations. The processing component 302 may include one or more processors 320 to perform all or part of the steps in the above described method. Moreover, the processing component 302 includes one or more modules which facilitate the processing component 302 to interact with other components. For example, the processing component 302 may include a multimedia module to facilitate the processing component 302 to interact with the multimedia component 308.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile storage devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 308 includes a front-facing camera and/or a rear-facing camera. When the device 300 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a Complementary Metal Oxide Semiconductor (CMOS) or Charge-Coupled Device (CCD) image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as Wi-Fi, 2G or 3G, or a combination thereof. In an exemplary embodiment, the communication component 316 receives a broadcast signal or broadcast associated information from an external broadcast management system via a broadcast channel. In an exemplary embodiment, the communication component 316 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In some exemplary embodiments, the device 300 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors or other electronic components, for performing the above described method.

In some exemplary embodiments, there is also provided a non-transitory computer readable storage medium including instructions, such as the memory 304, executable by the processor 320 in the device 300, for performing the above method. For example, the non-transitory computer-readable storage medium may be a ROM, a Random Access Memory (RAM), a CD-ROM, a magnetic tape, a floppy disc, and an optical data storage device.

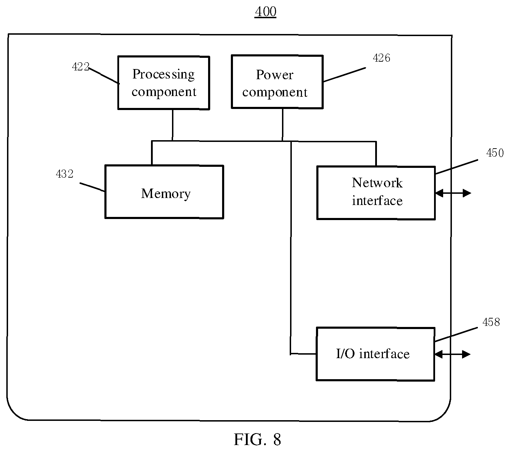

FIG. 8 is a block diagram illustrating a resource configuration device 400 according to an exemplary embodiment. For example, the device 400 may be provided as a server. As illustrated in FIG. 8, the device 400 includes a processing component 422, which further includes one or more processors, and memory resources represented by a memory 432 for storing instructions, such as applications, that can be executed by the processing component 422. The applications stored in the memory 432 may include one or more modules each corresponding to a set of instructions. In addition, the processing component 422 is configured to execute the instructions to perform the method described above.

The device 400 may also include a power component 426 configured to perform power management of the device 400, a wired or wireless network interface 450 configured to connect the device 400 to a network, and an I/O interface 458. The device 400 may operate based on an operating system stored in the memory 432, such as Windows Server TM, Mac OS XTM, UnixTM, LinuxTM, FreeBSDTM, or the like.

It is understood that "plural" in the disclosure refers to two or more, and other quantifiers are similar thereto. The term "and/or" describes an association relationship of associated objects, and it indicates one of three scenarios. For example, "A and/or B" may indicate: A exists alone, A and B both exist, or B exists alone. The character "/" generally indicates that the associated objects prior to and after the character "/" are in an "or" relationship. The singular forms of "a", "an", "said" and "the" are intended to include the plural forms, unless the context clearly indicates otherwise.

It is also understood that the meanings of terms such as "in response to" and "if" involved in the disclosure depend on the context and the practical application scenario. For example, the term "in response to" used here can be interpreted as "when", "while" or "if".

It is further understood that the terms "first" and "second" are used to describe various types of information, but these terms are not intended to limit the information. These terms are only used to distinguish the same type of information from each other and do not indicate a specific order or importance. The expressions with the terms "first" and "second" can be used interchangeably. For example, without departing from the scope of the disclosure, the first information may also be called the second information, and similarly, the second information may also be called the first information.

It is further understood that although the operations are depicted in the accompanying drawings in a particular order in the embodiments of the disclosure, it should not be construed as requiring that the operations are performed in the particular sequence shown or in a serial sequence, or that all of the operations shown be performed to obtain the desired results. Multitasking and parallel processing may be advantageous in particular environments.

Other embodiments of the disclosure will be apparent to those skilled in the art from consideration of the specification and practice of the disclosure disclosed here. The application is intended to cover any variations, uses, or adaptations of the disclosure following the general principles thereof and including such departures from the disclosure as come within known or customary practice in the art.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A resource configuration method, performed by a terminal, comprising:

   determining time-frequency resources that match a communication bandwidth based on protocol-predefined information and configuration information sent by a network device;
   wherein the communication bandwidth is less than or equal to a bandwidth threshold.

2. The method of claim 1, wherein the communication bandwidth comprises a first communication bandwidth and a second communication bandwidth, and the first communication bandwidth is less than the second communication bandwidth.

3. The method of claim 2, wherein the protocol-predefined information comprises a time-frequency resource configuration table for a control resource set (CORESET) #0, the time-frequency resource configuration table comprises a correspondence among a resource index, a number of resource blocks in the CORESET, a number of symbols occupied by the CORESET and a resource block offset, and the configuration information comprises the resource index; and
   determining the time-frequency resources that match the communication bandwidth based on the protocol-predefined information and the configuration information sent by the network device comprises:
   determining, in the time-frequency resource configuration table, the number of resource blocks in the CORESET, the number of symbols occupied by the CORESET and the resource block offset corresponding to the resource index contained in the configuration information.

4. The method of claim 3, wherein the first communication bandwidth and the second communication bandwidth correspond to the same time-frequency resource configuration table of the CORESET#0.

5. The method of claim 4, wherein the resource index comprises a first resource index and a second resource index, and the first resource index corresponds to the first communication bandwidth, and the second resource index corresponds to the second communication bandwidth.

6. The method of claim 5, wherein a resource block offset corresponding to the first resource index is a negative value.

7. The method of claim 5 or 6, further comprising:

determining a lowest spectrum position of the CORESET#0 based on a lowest spectrum position configured for a synchronization and PBCH block (SSB) and the resource block offset;
determining a lowest spectrum position of the CORESET#0 based on a lowest spectrum position at which an SSB is actually transmitted and the resource block offset; or
determining a lowest spectrum position of the CORESET#0 base on a lowest spectrum position at which an SSB is actually received and the resource block offset.

8. The method of claim 3, wherein the first communication bandwidth corresponds to a first time-frequency resource configuration table of the CORESET#0, and the second communication bandwidth corresponds to a second time-frequency resource configuration table of the CORESET#0; the first time-frequency resource configuration table is different from the second time-frequency resource configuration table.

9. The method of claim 8, wherein partial resource indexes in the second time-frequency resource configuration table correspond to the second communication bandwidth.

10. The method of claim 8 or 9, wherein a bit overhead for indicating the configuration information is less than or equal to a bit number threshold.

11. The method of claim 10, wherein the bit overhead for indicating the configuration information is 3 bits.

12. The method of any one of claims 4-11, wherein a number of symbols occupied by the time-frequency resource configuration table of the CORESET#0 corresponding to each of the first communication bandwidth and the second communication bandwidth is less than or equal to a target symbol number threshold; and
the target symbol number threshold is obtained by expanding a number of symbols corresponding to a reference symbol number threshold, and the target symbol number threshold is greater than 3.

13. The method of claim 12, wherein

a number of symbols occupied by the CORESET#0 is determined based on a number of symbols occupied by a CORESET corresponding to the resource index in the time-frequency resource configuration table, and the number of symbols occupied by the CORESET corresponding to the resource index in the time-frequency resource configuration table is less than or equal to the target symbol number threshold; and/or
the number of symbols occupied by the CORESET#0 is determined based on the number of symbols occupied by the CORESET corresponding to the resource index in the time-frequency resource configuration table and an expansion factor.

14. The method of claim 13, wherein the number of symbols occupied by the CORESET#0 is determined based on the number of symbols occupied by the CORESET corresponding to the resource index in the time-frequency resource configuration table and the expansion factor, comprising:

the number of symbols occupied by the CORESET#0 is determined based on a product of the expansion factor and the number of symbols occupied by the CORESET corresponding to the resource index in the time-frequency resource configuration table, wherein the product is less than or equal to the target symbol number threshold; or
the number of symbols occupied by the CORESET#0 is determined based on a sum of the expansion factor and the number of symbols occupied by the CORESET corresponding to the resource index in the time-frequency resource configuration table, in which the sum meets the target symbol number threshold.

15. The method of claim 14, wherein the expansion factor is determined based on the protocol-predefined information or configured by the network device.

16. A resource configuration method, performed by a network device, comprising:

sending configuration information to a terminal, so that the terminal determines time-frequency resources that match a communication bandwidth based on protocol-predefined information and the configuration information; wherein the communication bandwidth is less than or equal to a bandwidth threshold.

17. The method of claim 16, wherein the communication bandwidth comprises a first communication bandwidth and a second communication bandwidth, and the first communication bandwidth is less than the second communication bandwidth.

18. The method of claim 17, wherein the protocol-predefined information comprises a time-frequency resource configuration table for a control resource set (CORESET) #0, the time-frequency resource configuration table comprises a correspondence among a resource index, a number of resource blocks in the CORESET, a number of symbols occupied by the CORESET and a resource block offset, and the configuration information comprises the resource index; and
the configuration information causes the terminal to determine the number of resource blocks, the number of symbols and the resource block offset corresponding to the resource index contained in the configuration information in the time-frequency resource configuration table.

19. The method of claim 18, wherein the first communication bandwidth and the second communication bandwidth correspond to the same time-frequency resource configuration table of the CORESET#0.

20. The method of claim 19, wherein the resource index comprises a first resource index and a second resource index, and the first resource index corresponds to the first communication bandwidth, and the second resource index corresponds to the second communication bandwidth.

21. The method of claim 20, wherein a resource block offset corresponding to the first resource index is a negative value.

22. The method of claim 18, wherein the first communication bandwidth corresponds to a first time-frequency resource configuration table of the CORESET#0, and the second communication bandwidth corresponds to a second time-frequency resource configuration table of the CORESET#0; and
the first time-frequency resource configuration table is different from the second time-frequency resource configuration table.

23. The method of claim 22, wherein partial resource indexes in the second time-frequency resource configuration table correspond to the second communication bandwidth.

24. The method of claim 22 or 23, wherein a bit overhead for indicating the configuration information is less than or equal to a bit number threshold.

25. The method of claim 24, wherein the bit overhead for indicating the configuration information is 3 bits.

26. The method of any one of claims 19-25, wherein a number of symbols occupied by the time-frequency resource configuration table of the CORESET#0 corresponding to each of the first communication bandwidth and the second communication bandwidth is less than or equal to a target symbol number threshold; and
the target symbol number threshold is obtained by expanding a number of symbols corresponding to a reference symbol number threshold, and the target symbol number threshold is greater than 3.

27. The method of claim 26, wherein

a number of symbols occupied by the CORESET#0 is determined based on a number of symbols occupied by a CORESET corresponding to the resource index in the time-frequency resource configuration table, and the number of symbols occupied by the CORESET corresponding to the resource index in the time-frequency resource configuration table is less than or equal to the target symbol number threshold; and/or
the number of symbols occupied by the CORESET#0 is determined based on the number of symbols occupied by the CORESET corresponding to the resource index in the time-frequency resource configuration table and an expansion factor.

28. The method of claim 27, wherein the number of symbols occupied by the CORESET#0 is determined based on the number of symbols occupied by the CORESET corresponding to the resource index in the time-frequency resource configuration table and the expansion factor, comprising:

the number of symbols occupied by the CORESET#0 is determined based on a product of the expansion factor and the number of symbols occupied by the CORESET corresponding to the resource index in the time-frequency resource configuration table, wherein the product is less than or equal to the target symbol number threshold; or the number of symbols occupied by the CORESET#0 is determined based on a sum of the expansion factor and the number of symbols occupied by the CORESET corresponding to the resource index in the time-frequency resource configuration table, in which the sum meets the target symbol number threshold.

29. The method of claim 28, wherein the expansion factor is determined based on the protocol-predefined information or configured by the network device.

30. A resource configuration apparatus, comprising:

a processing module, configured to determine time-frequency resources that match a communication bandwidth based on protocol-predefined information and configuration information sent by a network device; wherein the communication bandwidth is less than or equal to a bandwidth threshold.

31. A resource configuration apparatus, comprising:

a sending module, configured to send configuration information to a terminal, so that the terminal determines time-frequency resources that match a communication bandwidth based on protocol-predefined information and the configuration information; wherein the communication bandwidth is less than or equal to a bandwidth threshold.

32. A communication system, comprising a terminal and a network device, wherein the terminal is configured to perform the method according to any one of claims 1-15, and the network device is configured to perform the method according to any one of claims 16-29.

33. A resource configuration device, comprising:

a processor; and a memory for storing instructions executable by the processor; wherein the processor is configured to perform the method of any one of claims 1-15.

34. A resource configuration device, comprising:

a processor; and a memory for storing instructions executable by the processor; wherein the processor is configured to perform the method of any one of claims 16-29.

35. A storage medium, wherein the storage medium stores instructions, and when the instructions in the storage medium are executed by a processor, the processor is caused to perform the resource configuration method according to any one of claims 1-15.

36. A storage medium, wherein the storage medium stores instructions, and when the instructions in the storage medium are executed by a processor, the processor is caused to perform the resource configuration method according to any one of claims 16-29.

Terminal

Network
device

Terminal

FIG. 1

determine time-frequency resources that match a
communication bandwidth based on protocol-predefined
information and configuration information sent by a network
device

S11

FIG. 2

determine the number of resource blocks, the number of
symbols and the resource block offset corresponding to the
resource index contained in the configuration information
in the time-frequency resource configuration table

S21

FIG. 3

send configuration information to a terminal

S31

FIG. 4

<u>100</u>

Processing module —101

FIG. 5

<u>200</u>

Sending module —201

FIG. 6

FIG. 7

400

```
     422          Processing        Power        426
                  component       component

     432
                Memory          Network       450
                                interface

                                I/O interface   458
```

FIG. 8

## INTERNATIONAL SEARCH REPORT

| | International application No. |
| --- | --- |
| | **PCT/CN2022/127431** |

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 资源配置, 控制资源集零, 时域, 配置表, 带宽, 索引, 对应, 关联, 匹配, 专用频谱, 资源块, 符号数, resource, configuration, time domain, configuration table, index, CORESET, bandwidth

### C. DOCUMENTS CONSIDERED TO BE RELEVANT

| Category* | Citation of document, with indication, where appropriate, of the relevant passages | Relevant to claim No. |
| --- | --- | --- |
| X | CN 111937468 A (BEIJING XIAOMI MOBILE SOFTWARE CO., LTD.) 13 November 2020 (2020-11-13) description, paragraphs [0072]-[0181] | 1-36 |
| A | CN 110602731 A (ZTE CORP.) 20 December 2019 (2019-12-20) entire document | 1-36 |
| A | CN 113875303 A (HUAWEI TECHNOLOGIES CO., LTD.) 31 December 2021 (2021-12-31) entire document | 1-36 |
| A | WO 2022077270 A1 (FUJITSU LTD. et al.) 21 April 2022 (2022-04-21) entire document | 1-36 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 July 2023** | **20 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2022/127431**

| Patent document cited in search report | | | Publication date (day/month/year) | Patent family member(s) | | | Publication date (day/month/year) |
|---|---|---|---|---|---|---|---|
| CN | 111937468 | A | 13 November 2020 | None | | | |
| CN | 110602731 | A | 20 December 2019 | US | 2022407655 | A1 | 22 December 2022 |
| | | | | WO | 2021052067 | A1 | 25 March 2021 |
| | | | | EP | 4033798 | A1 | 27 July 2022 |
| | | | | KR | 20220065847 | A | 20 May 2022 |
| CN | 113875303 | A | 31 December 2021 | EP | 4017166 | A1 | 22 June 2022 |
| | | | | EP | 4017166 | A4 | 31 August 2022 |
| | | | | WO | 2021031390 | A1 | 25 February 2021 |
| | | | | WO | 2021031305 | A1 | 25 February 2021 |
| | | | | WO | 2021031002 | A1 | 25 February 2021 |
| | | | | CA | 3148156 | A1 | 25 February 2021 |
| | | | | US | 2022174624 | A1 | 02 June 2022 |
| | | | | JP | 2022544799 | A | 21 October 2022 |
| WO | 2022077270 | A1 | 21 April 2022 | None | | | |

Form PCT/ISA/210 (patent family annex) (July 2022)